Europäisches Patentamt

European Patent Office

Office européen des brevets

(19)

(11) Publication number: **0 169 448**

**A1**

(12) **EUROPEAN PATENT APPLICATION**

(21) Application number: **85108644.7**

(22) Date of filing: **11.07.85**

(51) Int. Cl.⁴: **E 21 B 10/22**
**E 21 B 10/20**

(30) Priority: **17.07.84 JP 146949/84**
**22.08.84 JP 173353/84**

(43) Date of publication of application:
**29.01.86 Bulletin 86/5**

(84) Designated Contracting States:
**DE FR GB IT NL SE**

(71) Applicant: **Kawasaki Jukogyo Kabushiki Kaisha**
**1-1 Higashikawasaki-cho 3-chome**
**Chuo-ku Kobe-shi Hyogo-ken(JP)**

(72) Inventor: **Tsugaki, Shoichiro**
**Kawaju-Matsunoki-Ryo 14-9, Matsunoki 3-chome**
**Suginami-ku Tokyo(JP)**

(72) Inventor: **Miyasaka, Tomoo**
**18-10, Motonakayama 1-chome**
**Funabashi-shi Chiba-ken(JP)**

(72) Inventor: **Nishiyama, Yukio**
**To-5, Nakataniyama-Jutaku**
**Akashi-shi Hyogo-ken(JP)**

(72) Inventor: **Atsuta, Toshio**
**6-21, Uenomaru 2-chome**
**Akashi-shi Hyogo-ken(JP)**

(74) Representative: **Rau, Manfred, Dr. Dipl.-Ing. et al,**
**Rau & Schneck, Patentanwälte Königstrasse 2**
**D-8500 Nürnberg 1(DE)**

(54) **Rock bit.**

(57) A rock bit having a body (1) integrally made with three legs (2), three bearing pins (3) implanted into the legs (2) and extending obliquely centripetally to the center line of the body (1), and three cone cutters (7) supported by the journals (6) thereof. The journal (6) of the bearing pin (3) has a shape of spherical segment with one base having a height larger than the radius, and a locking member (10) is provided to retain the cone cutter (7) in place. An appropriate conical shape of a though hole (5) in the leg (2) provided to insert the bearing pin (3) eliminates the need for block fabrication of the body (1).

./...

FIG.1

0169448

- 1 -

<u>Rock Bit</u>

This invention relates to a rock bit, with cone cutters on, which is used for petroleum well drilling and so on.

In drilling petroleum well, etc., the rock bit, called tricone bit, has been widely used, which consists of a body, three legs formed thereunder and equally spaced in a circle, three bearing pins implanted respectively into each leg from inside thereof and extending centripetally obliquely to the rock bit body, and three cone cutters supported respectively on the journal of each bearing pin.

In this type of rock bit, because of its extremely large friction and impact on the journals supporting the cone cutters and because of precise machining required for the journal, it is well known that the bearing pin having the journal is separately made from material suitable for bearing other than that of the body, and heat treated and machined, before inserted into the bored through hole in the leg of the bit body for being secured by electron-beam welding, etc.

In this connection, with the conventional tricone bit, the journal of the bearing pin in general is of cylindrical shape, supports the cone cutter with roller bearing or frictional bearing, and carries the axial force with thrust bearing placed on the end face of the cylindrical journal. However, since the reaction force from drilling acts nearly perpendicular to the conical surface of the cone cutter, the resultant force acts obliquely to the journal, causing partial contact, and/or local load concentration, thus producing serious drawbacks such as excessive wear and a limited life. In addition, since the cylindrical journal is provided with a step on the bearing surface of the cone cutter at the end of the cylinder, the wall thickness of the cone cutter varies discontinuously at this point, thus causing stress concentration, leading to partially thinner wall, thus resulting in cracks.

In the well known prior art of this type of the rock bit, the shapes of the fitting portions of the bearing pin and the leg are both substantially cylindrical. As a result, when the base of the bearing pin is inserted from inside the leg into the through hole therein, the axis of the bearing pin must be completely in line with that of the through hole in the leg to effect insertion, so that, with a body unitarily integrated with three legs, the three bearing pins can't fit into the respective three legs with the three cone cutters already placed on the associated bearing pins, because of the interference between the three cone cutters. And an alternative way also won't work well, in which only the bearing pins are first installed into the legs, and then the cone cutters are inserted into the respective bearing pins. Therefore, if the bearing pins with the cone cutters on are to be inserted into the through holes in the legs from inside the legs, there is no way other than that in which; first three separate sections having respectively one leg are made, and then three bearing pins with the cone cutters on are respectively inserted into the through holes in the separate legs for e.g. electron-beam welding, before the three split body sections are welded into one-piece. But the procedure resulted in laborious welding and assembling work of the split body sections for integration, as well as brought about inevitable lack in overall geometrical accuracy of the thus-assembled body construction.

On the other hand, if the bearing pins are to be inserted into the through holes of the legs from outside, it may be possible that three bearing pins are inserted from inside through the through holes of the legs into the cone cutters, while positioning the three cone cutters in place within a unitary bit body already integrated with the three legs, but this procedure is difficult to assemble and adjust those parts as well as imposes a limitation on a locking means of the cone cutters.

An object of the invention is to provide a solution for aforesaid drawbacks of the conventional tricone bit in which the journal of the bearing pin supporting the cone cutter is of cylindrical shape, and to provide a rock bit in which loading on the bearings is reasonable in operation, and there is a minimum possibility of resultant stress concentration or cracks caused by generated internal steps on the cone cutters or discontinual changes in wall thickness, thus leading to a long life.

A further object of the invention is to provide a solution for aforesaid problems of the conventional tricone bit in which the

- 4 -

bearing pins are inserted and welded into the through holes of the legs which have been separately prefabricated before being unitarily integrated into one-piece bit body, and to provide a rock bit which has a configuration of insertion sections wherein bearing pins preset with cone cutters on the journal and locked with retainers can be easily inserted from inside and electron-beam-welded into the through holes of the three legs which have been unitarily prefabricated into a one-piece bit body.

To achieve the first objective, the invention is characterized in that a shape of journal of the bearing pin which extends obliquely centripetally to the center line of the rock bit body from each leg thereof is a spherical segment of one base having a height larger than the radius, and has a locking means for retaining the cone cutter in place.

It is advisable that aforesaid locking member is an annular member whose inside surface slidably surrounds the outer surface of the portion connecting said journal to the section of the bearing pin fixed to the leg, along with a segment of the journal adjacent thereto, and whose outside surface is securely confined by the cone cutter, as well as that at least the contact surfaces over which the cone cutter and the locking member slide along the journal section are spherical.

To achieve the second object, the invention is further characterized in that each leg of a unitary rock bit body integrated with three legs is provided therein with a conical through hole expanding from outside to inside, and the base of aforesaid bearing pin has a conical shape adapted to that of aforesaid through hole, as well as in that the position, the direction of the center line and the apex angle of aforesaid conical through hole in each leg is so optimized that three bearing pins which have already been respectively installed with an associated cone cutter on their journal with a locking means set can be inserted from inside in place into their individual through holes without interference with each other.

As mentioned above, the spherical shape of the journal allows the reaction from formations to act nearly normal to the outer conical surface of the cone cutters in drilling, and further even if the direction of the reaction varies, provides contact pressures on the journal always in the normal direction, thus preventing partial contact as commonly seen in the prior art of the cylindrical journal, as well as provides much wider contact area, thus reducing the magnitude of the pressure, and providing a more uniform distribution of the pressure, thus avoiding excessive wear owing to locally concentrated loading.

In addition, no possibility of steps on the bearing surface of the cone cutter also avoids stepwise change in the wall thickness of the cone cutter and resultant stress concentration, thereby eliminating the chance of cracking.

Furthermore, because spherical faces define at least the portions where the outer surface of the journal, and the inner surface of

- 6 -

the cone cutter and its locking member or retainer slide over each other, the configuration is easy to follow the complex movement of the cone cutter in drilling.

Even with the unsplit unitary integrated bit body, the above-defined conical shape of the through holes in the legs where the bases of the cone cutters insert into permits all the bearing pins with the individual cone cutters properly assembled and adjusted to be easily set in a given place and position from inside the bit body, as well as to be fixed in place securely by electron-beam welding from outside.

In the accompanying drawings, there are shown illustrative embodiments of the invention from which these and other of its objectives, novel features, and advantages will be readily apparent.

In the drawings:

Fig.1 is a sectional view in elevation of one leg of a rock bit and a bearing pin therein and a cone cutter assembled thereto, embodying the present invention;

Fig.1a is a sectional view in elevation of a modified embodiment of Fig.1;

Fig.2 is a like sectional view in elevation of another embodiment in accordance with the invention;

Fig.3 is a diagram showing how to insert the assembly of a bearing pin and cone cutter into the leg, further embodying the invention; and

Fig.4 is a perspective view of another embodiment according to the invention.

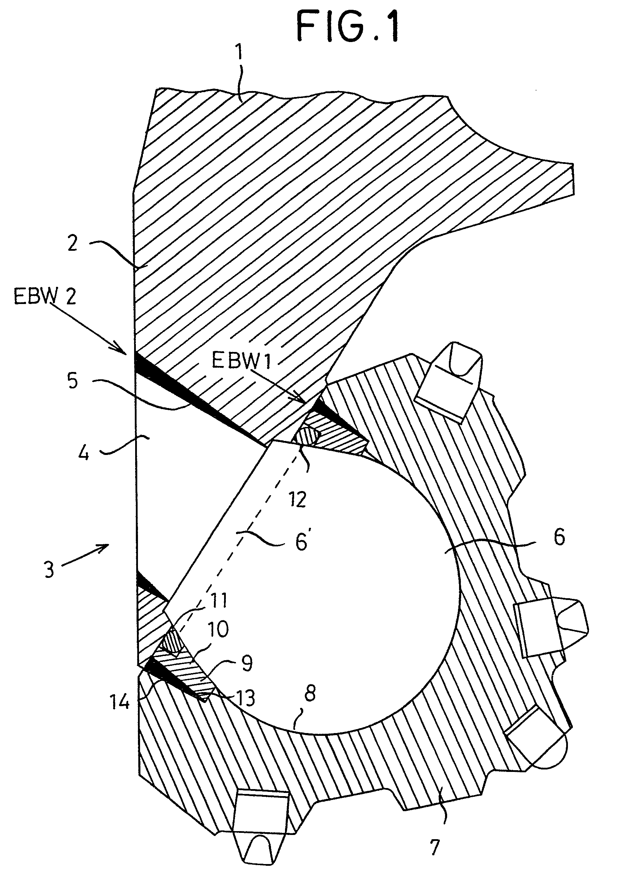

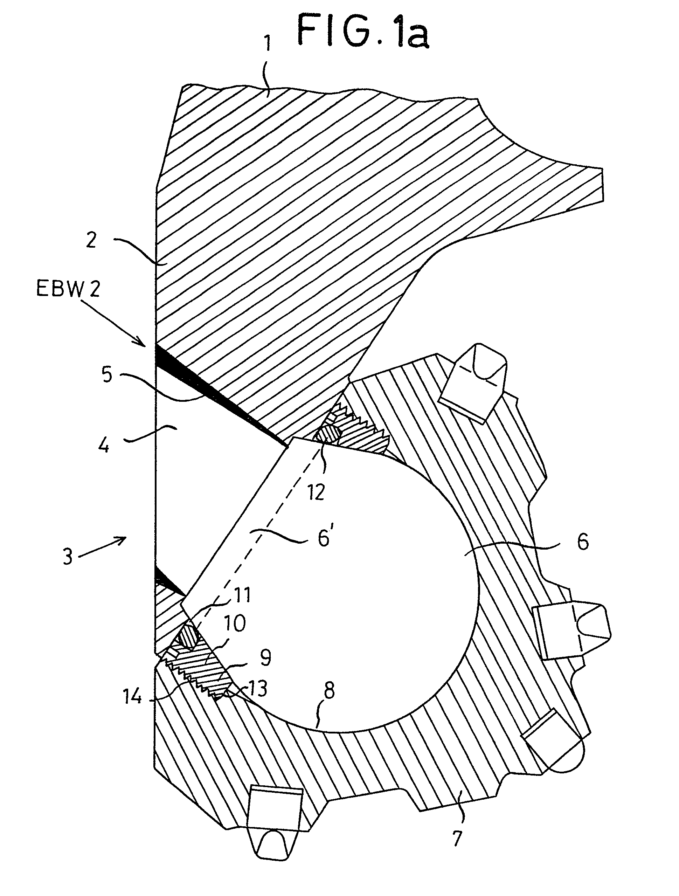

According to the embodiment shown in Fig.1, a rock bit body 1 is split into three pieces, each having a corresponding leg 2 integrally. In the leg 2 a through hole 5 is bored to fit the base 4 of a bearing pin 3.

The bearing pin 3 consists of the base 4, a journal 6 extending coaxially thereto and having a spherical segment of a height larger than the radius, and a low truncated cone 6' connecting both the base 4 and the journal 6. The radius of the upper end surface of the truncated cone 6' which connects the journal section 6 to the base 4 is slightly larger than that of the base 4, and on the inner side of the through hole 5 bored in the leg 2 a stepped recess is made to house the upper end of the truncated cone 6'.

The inside of a cone cutter 7 is defined by a semi-spherical bearing surface to be placed on aforesaid journal 6, and a cylindrical recess ajacent thereto. The cone cutter 7 is so designed that its axis be aligned in place with the center line of the bearing pin 3, when the internal semi-spherical surface of the cone cutter 7 inserts on the semi-spherical portion of the journal 6 of the bearing pin 3.

The cylindrical section of the recess in the cone cutter 7 is provided with a step 13, and the diameter of the entrance-side cylindrical section 14 of the recess is slightly larger than that of the spherical surface.

An annular recess 9 is defined by aforesaid cylindrical surface 14, the step 13, an outer surface of the bearing pin 3 and also an inner surface of the leg 2. An annular locking member 10 with a truncated conical sectional shape , whose four sides are in contact within the annular recess 9 with aforesaid four surfaces, is inserted into the annular recess 9 after the cone cutter 7 has been installed into the bearing pin 3. Then electron-beam welding (as shown in the Figure by EBW1) the cylindrical surface 14 with the surface of the locking member 10 facing the cylindrical surface 14 completes the locking of the cone cutter 7 to the bearing pin 3.

Alternatively, the locking can be effected by threads as shown in Fig.1a rather than electron-beam welding between the locking member 10 and the cylindrical surface 14 of the cone cutter 7.

A provision of the step 13 in the recess of the cone cutter 7 prevents electron beams from reaching the contact portion of the cone cutter 7 and the journal 6 while welding, and helps enlarge the sectional area of the locking member 10, thus ensuring a space 11 for a packing 12 which prevents mud water from entering the bearing portion between the locking member 10 and the bearing pin 4.

The bearing portion of the locking member 10 against the bearing pin is defined by a partial surface of a sphere of the nearly

- 9 -

same center and radius with those of the bearing section 8 of the cone cutter 7.

The drawings show the tungsten carbide insert (TCI) type of cone cutter 7, which won't restrict the invention thereto but e.g. a milled tooth type of cone cutter may be used.

As mentioned above, a cone cutter 7 is inserted and locked on to a bearing pin 3 to make their assembly, and the base 4 of the bearing pin 3 as assembled with the cone cutter 7 is inserted into the through hole 5 in a leg 2, and electron-beam welded (shown by EBW2 in the drawings) from outside the leg 2 to make an assembly of the leg 2, the bearing pin 3 and the cone cutter 7. Then these three assemblies are electron-beam welded into a body 1. In electron beam welding the bearing pin 3 and the leg 2, the electron beams stop at the step between the cylindrical base 4 of the bearing pin 3 and the truncated cone section 6' thereof, thus preventing the packing 12 from burning.

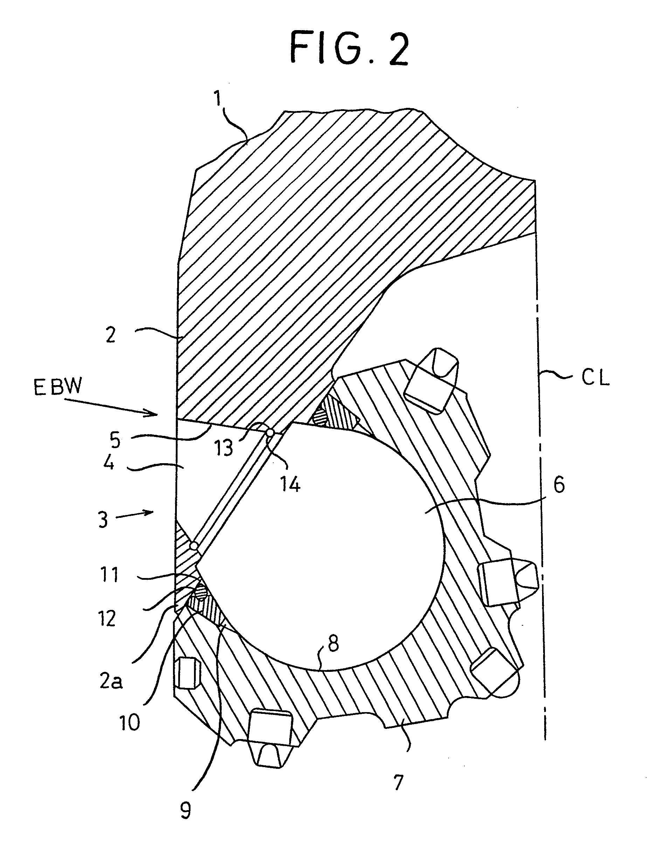

In the embodiment mentioned above, the base 4 of the bearing pin 3 is shaped as a cylinder and inserted into the leg 2. After electron-beam welding the portion, the three welded assemblies are again electron-beam welded into a unitary rock bit body 1. This configuration may have some drawbacks, such as the man-hours required for and a slightly poor precision caused by the welding work of three split members into a unitary rock bit body 1. Fig.2 shows a solution for the drawbacks :

From the beginning a rock bit body 1 is unitarily provided together with three legs 2, which have respectively a through hole opened so as to fit the base 4 of a bearing pin 3. The through hole 5 is defined by a cone enlarging from outside towards inside in the leg 2 as shown in Fig. 2.

The bearing pin 3 comprises a base 4 having such a shape as to fit aforementioned conical through hole 5, and a journal 6 coaxially adjacent thereto.

The shape of the journal 6, and the shape and configuration of a cone cutter 7 supported thereby and its locking means are similar to those of the embodiment shown in Fig.1, with the like reference numerals for the like parts, so a further explanation is eliminated.

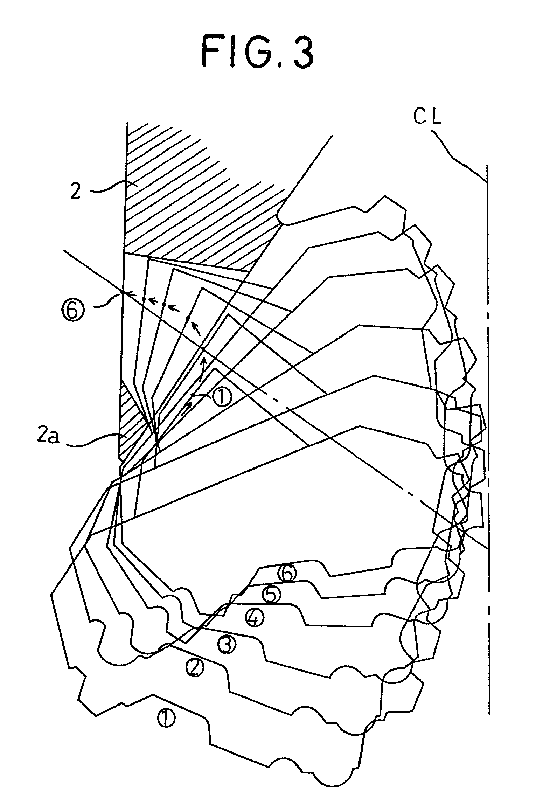

The shape of the through hole 5 in the leg 2 in which the base 4 of the bearing pin 3 is inserted is designed to have such an optimized position, inclination and apex angle that a last assembly of a bearing pin 3 with a cone cutter 7 already installed thereon in place and locked with a locking member 10 can be inserted in place into the associated through hole 5 in the leg 2 from inside thereof, without interference with other two cone cutters 7 already installed therein. Fig.3 shows how the last bearing pin 3 with the cone cutter 7 integrally engaged therewith can be inserted into the associated through hole 5 defined as such.

In Fig.3, the assembly of the cone cutter 7 and the bearing pin 3 is shifted step by step from a position 1 where the end of the conical base 4 of the bearing pin 3 does not yet peep at the through hole 5 at all, and also the outermost point of the cone cutter 7 does not cross the center line CL of the bit body 1 into the right side thereof, via positions 2 , 3 , 4 , and 5 respectively outlined in the Figure, into the given insertion position 6 . Meanwhile, since the assembly of the cone cutter 7 and the bearing pin 3 never crosses out of the center line CL of the bit body 1, and yet never interfere with the associated leg 2, the assembly can be installed in place into the leg 2 from inside thereof, without interference with the other two assemblies already installed.

The leg 2 is thin in wall thickness at the end shirttail portion 2a, but the embodiment has a conical shape of the through hole 5 in which the base 4 of the bearing pin 3 is inserted, which provides a welding area large enough for positive welding. And, the configuration in which the conical base 4 of the bearing is inserted into the conical through hole 5 can tolerate a slightly poor precision to assure easy entry and close contact for an appropriate seam surface to effect electron beam welding, thereby resulting in a progressive and solid welding.

Furthermore, as shown in Fig.2, a provision of two semi-circular sectional grooves, facing each other on the inner surface of the through hole 5 of the leg 2 and on the outer surface of the base 4 of the bearing pin 3, can form a stop for electron beams in welding, thus preventing the packing 12 from burning and avoiding the possible stress concentration caused by welding.

Aforesaid configuration allows the base 4 of the bearing pin 3 to be inserted into the through hole 5 of the leg 2, without the assembly of the bearing pin 3 and the cone cutter 7 being protruded out of its own region split by three planes passing the center line CL of the rock bit body 1 and crossing at 120 degrees with each other, thus permitting a unitary integrated rock bit body 1 to be manufactured from the beginning, thus eliminating the need for three block fabrication.

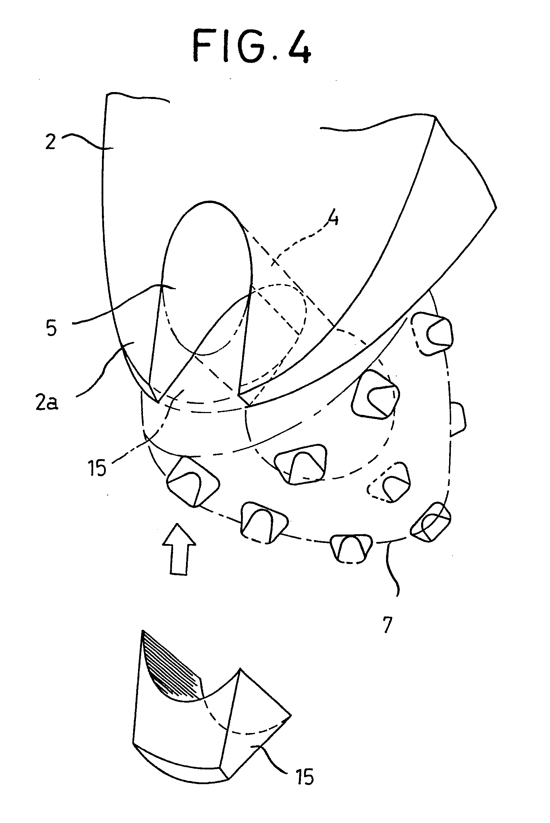

Furthermore, as shown in Fig.4, an alternative way of integration of a rock bit body is conceivable in which the shirttail portion 2a of a leg 2 is cut away by its full width from the through hole to the end, a bearing pin 3 installed with a cone cutter 7 is inserted into the through hole 5 from the shirttail end of the leg 2 through the cut-out opening and then a member 15 prefabricated to the shape of the cut-out opening is inserted to complete the rock bit body 1 by electron-beam welding the member 15 integrally with the base 4 of the bearing pin 3. This configuration also eliminates the need for block fabrication of the rock bit body 1.

In the embodiments shown above, since the outer surface of the journal 6 and the inner bearing surface 8 of the cone cutter 7 both are the same spherical surfaces fit into each other, and the metallic surface of the locking member 10 in contact with a portion of the journal 6 is also defined by the same spherical surface, this allows the cone cutter 7 to freely rotate about the center line of the bearing pin 3 as well as to tilt to some degrees on the journal 6 about the center of the sphere of the journal 6 of the bearing pin 3. Therefore, when the cone cutter 7 would tilt to accomodate the direction of reaction force acting on the cone cutter 7 on drilling, the uppermost portion of the internal surface of the leg 2 against the bottom face of the cone cutter 7 is depressed with high intensity. But, because the portion is far away from the spherical center, and the wall thickness thereof is sufficiently heavy, the resultant loading according to the invention is advantageously much less than the prior art. And yet, if the portion should be worn out, the ability of the cone cutter 7 to readily tilt about the center of the sphere tolerates an extent of wear, with little effect on its life.

According to the present invention, the wide contact area of the journal 6 of the bearing pin 3 can reduce the surface pressure thereof, and provide a more uniform distribution of pressure thereon as well as the reaction force from drilling is much more optimized, thus resulting in a further betterment embodied in a rock bit life.

In addition, the appropriate conical shape of the portion of the bearing pin 3 to be connected to the leg 2 enables the bearing pin 3 with the cone cutter 7 preset on to be installed on a unitary integrated bit body 1 from inside thereof, and also allows the locking means 10 to be easily set in, as well as eliminates the need for multi block prefabrication of the bit body and integration into one piece with electron beam welding, thus resulting in low cost and improved reliability.

Claims :

1. A rock bit comprising a body (1) provided at the lower portion thereof with three legs (2) equally spaced in a circle, a bearing pin (3) fitted into a through hole (5) bored in each of said legs (2) and secured at a base (4) thereof and extending obliquely centripetally to the center line of said body (1), a cone cutter (7) rotatably supported on a journal (6) of said bearing pin (3), characterized in that said journal (6) of said bearing pin (3) has a shape of spherical segment of one base having a height larger than the radius, and comprising a locking means (10) for retaining said cone cutter (7) in place.

2. A lock bit as claimed in claim 1, characterized in that said locking means (10) having an annular shape rotatably surrounds at the inside the outer surface of a portion connecting said journal (6) to another portion of said bearing pin (3) secured to said leg (2), and a part of said journal (6) adjacent to said portion, and is secured at the outside by said cone cutter (7), and at least the surfaces over which said journal of said bearing pin (3) slides to said cone cutter (7) and said locking means 10) are spherical.

3. A rock bit comprising a body (1) provided at the lower portion thereof with three legs (2) equally spaced in a circle, a bearing pin (3) fitted into a through hole (5) bored in each of said legs (2) and secured at a base (4) thereof and extending obliquely centripetally to the center line of said body (1), a cone cutter (7) supported on a journal (6) of said bearing pin (3), characterized in that said journal (6) of said bearing pin (3) has a shape of spherical segment of one base having a height larger than the radius, and comprising a locking means (10) for retaining said cone cutter (7) in place, and that said through hole (5) bored in each of said legs (2) of said body (1) having a conical shape expanding from outside of said leg toward inside, said base (4) of said bearing pin (3) having a conical shape adaptable to said conical through hole (5), said conical through hole (5) having a position, a direction of the center line, and an apex angle so that said bearing pin (3) with said cone cutter (7) supported on said journal (6) and with said locking means (10) set can be inserted in place into its associated through hole (5) without interference with said other two bearing pins (3) already set in said respective through holes (5).

FIG.1

# FIG.1a

315

# FIG. 2

0169448

# FIG.3

0169448

S/S

# FIG.4

**European Patent Office**

**EUROPEAN SEARCH REPORT**

EP 85 10 8644

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 010 985 (REAR)<br>* Column 2, lines 42-54 * | 1 | E 21 B 10/22<br>E 21 B 10/20 |
| A | | 2,3 | |
| A | FR-A-1 260 582 (NEYRPIC)<br>* Page 1, right-hand column, lines 21-36 * | 1-3 | |
| A | US-A-3 251 634 (DAREING)<br>* Column 2, lines 42-43 * | 1,3 | |
| A | US-A-4 098 150 (PENNY)<br>* Column 3, lines 56-60; column 4, lines 7-12; column 4, lines 24-27 * | 1-3 | |
| A | US-A-1 990 007 (SPERRY)<br>* Page 1, right-hand column, lines 43-46 * | 1-3 | TECHNICAL FIELDS SEARCHED (Int. Cl.4)<br><br>E 21 B<br>F 16 C |
| A | US-A-3 361 494 (GALLE)<br>* Column 11, line 64 - column 12, line 30 * | 1,3 | |
| A | US-A-2 690 935 (ALEXANDER)<br>* Column 2, lines 3-9 * | 1,3 | |

The present search report has been drawn up for all claims

| Place of search | Date of completion of the search | Examiner |
|---|---|---|
| THE HAGUE | 17-10-1985 | SOGNO M.G. |